# EUROPEAN PATENT APPLICATION

(11) **EP 3 045 144 A2**
(43) Date of publication of application: **20.07.2016**
(21) Application number: 16151932.7
(22) Date of filing: 19.01.2016
(51) Int. Cl.: A61C 7/12, A61C 7/14, A61C 7/28, A61C 7/16

(54) **HYBRID BIOADAPTATIVE SELF-LIGATING BRACKET**

(30) Priority: 19.01.2015 BR 102015001220
(71) Applicant: EXPANSOR Equipamentos ORTODONTICOS Ltda EPP., 13567-620 Sao Carlos SP (BR)
(72) Inventor: RODRIGUES, Alan, 11060-300 Santos (BR)
(74) Representative: Trillat, Anne-Cecile

(57) **Abstract**

This patent application was conceived to eliminate definitively in orthodontic treatment, the need for both dental extractions and the use of accessory devices and/or removable orthopedic braces during treatment for the correction of various types of malocclusions. For this, the application described herein unites the tooth movement and functional orthopedic effects in jaws, and wherein the interrelation with the oral musculature caused by a muscle activation bar (10) and a sliding door (2) with greater surface contact with the orthodontic wire (15).

The application proposed further presents a base with conical channels (14) with trapezoidal profile of mechanical withhold that provides increased bond strength to dental enamel, and eases the removal, without causing damage to the tooth enamel.

## Description

### Field of the invention

The present application relates to a hybrid bioadaptative self-ligating bracket with constructive arrangement which interacts with the teeth and the muscles of the oral cavity, allowing orthodontic and orthopedic movements, showing also a base channels with conical grooves trapezoidal profile which increases the mechanical retention of adhesion strength to the enamel while facilitating removal of the bracket from the tooth without causing damage to tooth enamel and a double sliding door safety device and that provides a greater surface contact with the orthodontic wire.

### Background of the invention

Orthodontics and Functional Orthopedics of the jaws are specialties of dentistry that aims to treat the dentoalveolar malocclusions, returning to the patients a functional occlusion providing periodontal health, functional stability, health of Temporomandibular Joints, cosmetic dental and facial aesthetics.

Orthodontics uses for this a device called a bracket that is attached to the tooth using a specific system of membership and does not cause any damage to the surface of tooth enamel.

The bracket has a slot in its body that enables the insertion of an orthodontic wire, which after being inserted in each bracket already joined in all teeth of the dental arch, will provide specific features of this deflection orthodontic wire generating a force sufficient magnitude to move the dentoalveolar structures.

The Brackets are thus the main components for the connection between the teeth, supporting structures, muscles of the mouth and the forces applied by the deflection of orthodontic wires.

Functional Orthopedics of the jaws makes use of removable appliances that work on teeth and supporting structures, moving the muscles of the mouth to release the dentoalveolar movement. They are bulky removable appliances, primarily made of acrylic resin and stainless steel wire and should be used throughout the day to get the necessary corrections of the dental arches, and have to be modified several times during treatment the different types of bad occlusions that affect the dental arches.

The volume of the functional appliances,the significant amount of time and the time that must be used and the inability to speak using these devices, virtually preclude the use of these types of devices by adults.

However, the majority of malocclusions installed in both children and adults require a combination of the effects of orthodontics and orthopedics functional jaws, so that the treatment will provide full results, thereby avoiding the removal of teeth and even jaw surgery.

All self-ligating brackets made to date have been developed in order to have the smallest possible size, in order to provide greater comfort and less discomfort for patients.

The fact is that small brackets are nonetheless a nuisance during the initial period of adaptation to treatment. And its small size brings a problem with difficult clinical problem solution because it is not possible to obtain a proper control of dental rotation in the distal mesial direction, which makes it necessary use accessory devices together with the brackets for the appropriate dental correction, which significantly increases both the orthodontic treatment time as the risk of irreversible side effects.

Another problem of self-ligating brackets with small sized body, is that the bracket cannot make an active orthopedic interaction with muscle clearance when in contact with this perioral muscles, which make great pressure on the jaws (a) enable dentoalveolar movement in the transverse direction causing the jaws atresia and consequent mandibular retroposing, significantly increasing both the need of dental extractions and the orthodontic treatment time.

Numerous patent documents relate to brackets as described above, such as US20070134612, US20070224568, US4496317 and US7131836.

It is important to note also that the existing self-ligating Brackets currently on the market do not have a door wide enough, and this door is not fixed in the incisal part of the bracket body by two security locks that facilitate its sliding without danger of displacement full or even an occasional door opening during chewing, they don't have two security that fits its ends formed by a stable and secure attachment support in bilateral stability in gingival crevices of the body of the hybrid bioadaptative self-ligating bracket, providing a closing and complete coverage slot where the orthodontic wire is inserted, making it possible to correct a significant clinical problem of tooth rotation in the distal direction in the mesial half the treatment time compared to conventional treatment brackets.

### Solutions of the invention in face of the prior art

The self-ligating brackets currently on the market do not have a bracket size that allows the activation of the muscles of the lips in the anterior region. By increasing size we eliminate the force of the buccinator muscles that compress the posterior teeth, causing palatal atresiating the jaw and causing the narrowing of the dental arch. This is other han will cause crowding and anterior tooth inclination and mandibular retropositioning.Self-ligating brackets that have characteristics as a small body that do not interact with the perioral muscles to obtain the dentoalveolar orthopedic effects sorely needed in the correction of malocclusion in the transverse direction.

The base of the hybrid bioadaptative self-ligating bracket has its adhesion systhem to the tooth with mechanical retention characteristics with a unique format conical channels with trapezoidal profile that provide excellent adhesion to the tooth.This innovative format allows what none of other self-ligatingligating bracket allow, to remove adhered resin in the ligating base of the bracket by pressuring both ends of the base using just the tip of a medical instrument without the need for application of aluminum oxide, thereby enabling immediate resealing of the bracket on the tooth.

The conical base of mechanical retention increases the adhesion strength to the enamel at the same time facilitates removal of the bracket from the tooth without causing damage to tooth enamel.

The hybrid bioadaptative self-ligating bracket has the ideal characteristics that unite the functional orthodontic and orthopedic needs necessary for the treatment of various types of malocclusions in half the time held with other brackets and without extractions.

The Hybrid Bioadaptative Self-Ligating Bracket is a completely new device, which with its specific characteristics, allows for the first time to combine the orthodontic tooth movement and orthopedic dentoalveolar transverse effects in one unit, providing a dentoalveolar movement in the transverse direction without causing any side effects very common in conventional orthodontic treatment.

With the Hybrid Bioadaptative Self-Ligating Bracket, it is obtained the necessary characteristics for the correction of various types of dentoalveolar malocclusions are obtained without the need to use other removable auxiliary devices, thus eliminating extractions in orthodontic treatments.

### Purpose of the invention

One of the main objective of the Hybrid Biodaptative Self-ligating Bracket is in the construction in an ideal size, length (X axis) of 4.5 mm, height (Z axis) of 3.0 mm and width (Y axis) of 3.6mm, which provides the orthopedic activation of muscles of the lips (c) to prevent forces applied to the orthodontic arch cause labial inclination of anterior teeth, thus preventing the teeth flaring effect, which is undesirable and yet it is very common in all orthodontic treatments.

With this previous muscle activation caused by hybrid bioadaptative self-ligating brackets (c) we move away from the posterior dentoalveolar contact of the buccinator muscles, (b) that are primarily responsible for the maxillary atresia of the arches, thereby helping to reach the transverse orthopedic dentoalveolar effects needed to correct the malocclusion without the need of dental extractions, as is normally done with orthodontic appliances that do not have these described features.

Another object of the application is to provide a sliding door that favors a larger contact surface with the orthodontic wire.This door ensures, through two security locks incorporated into the body of the sliding door, full security to secure the wire inside slot.Further two stability supports at both ends of the slinding door allow full stability for dental speed control. The greatest door has a significant action in the mesial distal direction of dental correction.

The adaptation of stability supports of the sliding door in the docking slots located in the gingival portion of the body of the hybrid bioadaptative self-ligatingligating bracket, when closed provides a firm and secure coverage of the slot of the hybrid bioadaptative self-ligating bracket. Bringing this way both sides of the hybrid bioadaptative self-ligating bracket is like a fourth fixed part, the only one thats mobile, allowing the insertion of orthodontic wire which in turn will have greater contact with the sliding door and will provide correction of rotated teeth more effectively and without the need for accessory equipment.

Yet another objective of the proposed application is the manufacturing of a base endowed with conical grooves with trapezoidal profile for better grip and greater strength of the bracket to the tooth. But, as important as the glue of the bracket to the tooth enamel, is to have a bracket that can be taken off the enamel without damage to the tooth. An important need for treatment for the correction of malocclusion is the repositioning of the bracket on the tooth, so that the hybrid bioadaptative self-ligating bracket has incorporated in its base an important feature when it is necessary to reseal the bracket to the tooth, which is the total removal of the ligating resin attached to the bracket base, which through a simple pressure of the tip of a medical instrument over said resin adhesion in the base, allowing it to be easily removed without application of aluminum oxide jet being the base immediately ready for resealing. Thus, the base with conical grooves and trapezoidal profile of mechanical retention provides increased bond strength to enamel at the same time for easy removal without causing damage to the tooth enamel.

It is a self-ligating bracket with specific bioadaptative features that turn the bracket in a hybrid system. Hybrid because it transforms the body of the bracket and the bracket door in important interaction elements with teeth, orthodontic wires and the muscles of the mouth, allowing the bracket to provide orthodontic movements along with the orthopedic jaw effects, which previously were obtained by combining various types of fixed and orthopedic devices.

Its hybrid bioadaptative feature facilitates dentoalveolar movement without generating unwanted side effects on the teeth and/or support structures, very common in treatments performed during many years of use of dental appliances. With these features, bioadaptative and hybrid, inserted in this new self-ligating bracket, it was eliminated definitively in orthodontic treatment, the need for both dental extractions and the use of accessory devices and/or removable orthopedic braces during treatment for the correction of various types of malocclusions.

### Brief Description of the Figures

Figure 1 shows the hybrid self-ligating bracket in a perspective view.
Figure 2 illustrates the hybrid self-ligating bracket in a perspective view with the door outside the bracket body for the better view of the safety latch and bilateral bridges of stability.
Figure 3 illustrates the hybrid self-ligating bracket in side view with the lock fully inserted into the cavity, but in the closed position, where we can observe the function of the safety locks of the sliding door and the groove of the stability supports. It is further demonstrated an enlarged detail to ease the view.
Figure 4 illustrates the hybrid self-ligating bracket in side view with the lock fully inserted into the cavity in the open position and the safety latch which prevents complete displacement of the sliding door of the bracket body. It is further demonstrated an enlarged detail to ease the view.
Figure 5 illustrates a rear view of the bracket, it can be seen the base of the hybrid self-ligating bracket showing the locking system consisting of conical grooves and trapezoidal profile.
Figure 6 illustrates a perspective view highlighting the rear of the bracket and can be viewed the base of the hybrid self-ligating bracket with conical grooves and trapezoidal profile.
Figure 7 illustrates the bracket with front two-dimensional view highlighted and it can be observed the door and the position of the open latch simulating the positioning of the wire for lock.
Figure 8 illustrates the bracket in two-dimensional view with frontal prominence, and can be seen the door and the position of the latch closed simulating the wire properly inserted into the slot, where it is possible to view all wire contact surface with the door.
Figure 9 illustrates an example of the upper jaw arch object of treatment through the hybrid self-ligating bracket, simulating the action of the buccinator muscles, which are primarily responsible for atresia (A) of the maxillary arches.
Figure 10 illustrates an example of the upper maxillary arch with the hybrid self-ligating bracket properly working, demonstrating the previous muscle activation of the brackets (C) being removed from the posterior dentoalveolar contact the buccinator muscles (B) that are primarily responsible for atresia of the maxillary arches.
Figure 11 illustrates an example of the upper maxillary arch showing the effects achieved by using the hybrid self-ligating bracket, showing excellent leveling and alignment of the dental arch (D) due to the association of orthodontic movement in conjunction with orthopedic purposes, which provides treatments without the need of dental extractions.

### Detailed Description of the invention

The present application discloses a hybrid self-ligating bracket (1), which connects the tooth movement together with the functional orthopedic effects jaw as it has a unique feature of inter-relationship with the oral musculature. This interrelationship is provided by constructive provision of the bracket that has a muscle activation bar (10) in one of their front portions. With this previous muscle activation the hybrid bioadaptative self-ligating brackets, it is moved away from the posterior dentoalveolar contact with the buccinator muscles that are primarily responsible for the maxillary atresia (A) of the arches, thereby helping to reach the transverse orthopedic dentoalveolar effects needed to correct the malocclusion without the need of dental extractions, as is normally done with orthodontic appliances.

In order to eliminate the effect of anterior tilt of the teeth that is unwanted and common in all orthodontic treatments, the hybrid bioadaptative self-ligating bracket (1) is constructed with preferred dimensions of length (X axis) of 4.0 mm to 5.0 mm, height (Z-axis) of 2.5 to 4.0 mm and width (Y axis) of 3.3 to 4.0 mm, more preferably length (X axis) of 4.5 mm, height (Z axis) of 3.0 mm and width (Y axis) of 3.6 mm to provide orthopedic activation of the orbicular muscle of the mouth to prevent the orthodontic forces applied on the dental arches do not cause inclination of anterior teeth, avoiding the effect of the buccal teeth.

The said bracket (1) is equipped with a sliding door (2) that favors a larger contact surface with the orthodontic wire (15). This door (2) has a constructive arrangement which ensures through two safety catches (3) incorporated in the body of said sliding door safely to avoid unwanted opening of the door, holding the wire into the slot (7) and provide stability for control of dental rotation.

The door (2) has a stability support (6). The adaptation of stability supports (6) of the door (2) sliding in engagement slots (8) located in the gingival part (4) of the body of said bracket (1) provides, when closed, a cover fully closed and firmly and safe of the slot (7) of the bracket.

Bringing this way both sides of the hybrid bioadaptative self-ligating bracket (1) as if it were a fourth fixed part, but it is mobile.

Therefore, the sliding door (2) is lodged in a specific slot within the enhanced protection (12), which comprises the major part of the functional orthopedic activation of the hybrid bioadaptative self-ligating bracket, which is muscle activation bar (10), slides to the other side of the body of the bracket in bilateral clefts (8) that receive the stability support (6).

This is made for the insertion of orthodontic wire (15) where its deflection may have greater contact with the sliding door (2), thereby enabling the correction of problems like dental medial distal rotations, eliminating the use of devices and accessory devices to perform these important movements in orthodontic corrections.

The Muscular Activation Bar (10) where the door (2) slides is part of the body of the bracket, increasing length, width and height of the hybrid bioadaptative self-ligating bracket (1), just to offer the functional orthopedic features previously explained; however, this protection also prevents tartar from building up between the sliding door (2) and the body of the said bracket, which would hinder the opening and/or closing of the sliding door (2).

The door (2) has its opening and closing stage limited by the recess (16) provided in the body of muscle activation bar.

The said door (2) slides on the slot (7) from the incisal side (5) to be supported with full stability and safety in a slot (8) in gingival specific part of the body of the bracket (4). It has preferred dimensions of length (X axis) of 2.7 mm to 3.5 mm, more preferably, length (X axis) of 3.0 mm, forming a fourth part that closes enabling greater contact with the orthodontic wire providing better correcting conditions (15) in the distal mesial meaning of this important feature of malocclusion, bringing the advantage of a significant reduction in orthodontic treatment time.

The hybrid bioadaptative self-ligating bracket has a base (13) with trapezoidal profile and conical grooves (14) which increases the mechanical retention and adhesion strength to enamel and at the same time facilitates removal of the bracket attached to the tooth by the dentist without causing damage to the tooth enamel.

In most orthodontic treatments, it is normal during the progress of treatment the repositioning of brackets for better and faster results with less iatrogenic forces to the teeth and supporting structure, most of the brackets do not provide easy removal of the adhesive system of the base (13) of the bracket, which leads to the need for the application of aluminum oxide jet on the bracket base, making this a more complicated clinical procedures and with a high possibility of causing cross contamination, as well as result in contamination of the environment when this substance is discarded.

The base (13) with conical grooves and trapezoidal profile (14) of the hybrid bioadaptative self-ligating bracket was designed to allow through a simple pressure of the tip of a clinical instrument on the remaining adhesion composite of the base of the bracket (13) can be easily removed without the need for an aluminum oxide jet is immediately ready for resealing.

With these features, we can solver one of the big problems since the beginning of the use of brackets in orthodontics, such as the need for dental extractions in clinical cases with lack of space in the dental arch.

The hybrid bioadaptative self-ligating bracket (1) proposed enables the professional to perform orthodontic treatment with excellent alignment of all dental contact points, providing, of course, correct occlusal-functional relationship (D) due to the association of orthodontic movement (size of the sliding door with greater contact with the orthodontic wire) together with the functional orthopedic effects (bracket size that interacts with the muscles), with a base (13) having conical grooves and trapezoidal profile (14) provides excellent retention to the enamel, but is also easy to remove the bracket attached to the tooth by professional without causing any damage to the tooth enamel and easy removal of the remaining composite resin adhered to the bracket base for immediate resealing, whose characteristics were only obtained with the use of various fixed and removable devices associated with a long period of orthodontic treatment (36 months) and it was often necessary to perform extraction of 4 teeth.

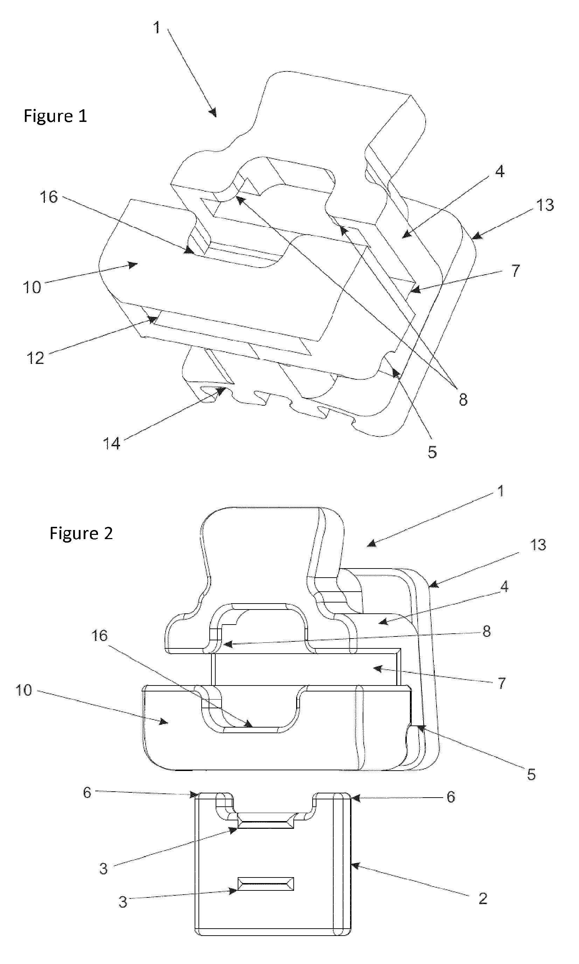

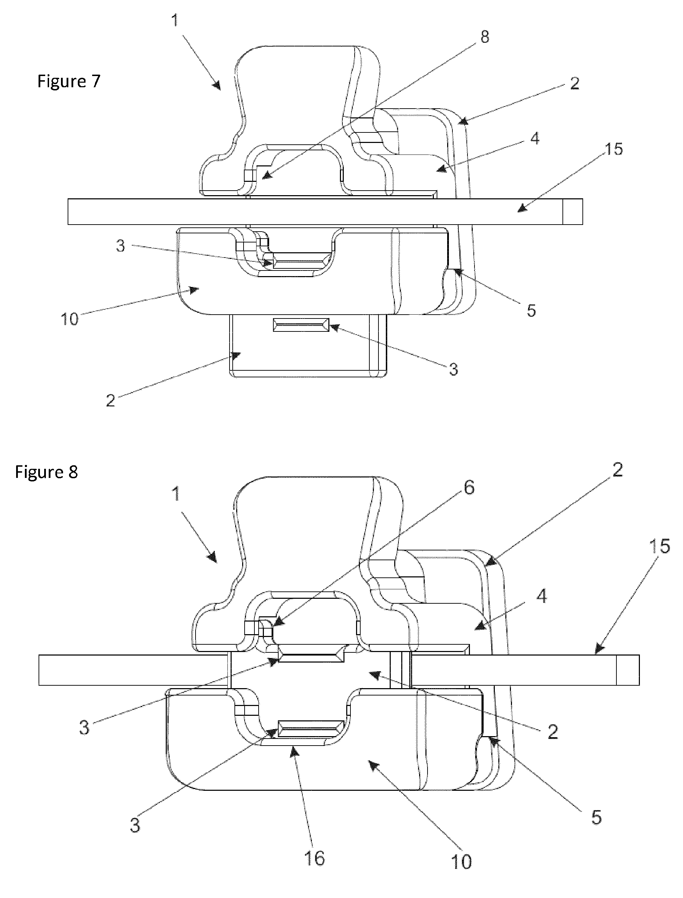

For illustrative purposes are attached to the patent application the illustrative figures 1 to 8 illustrating the details of the hybrid bioadaptative self-ligating bracket.

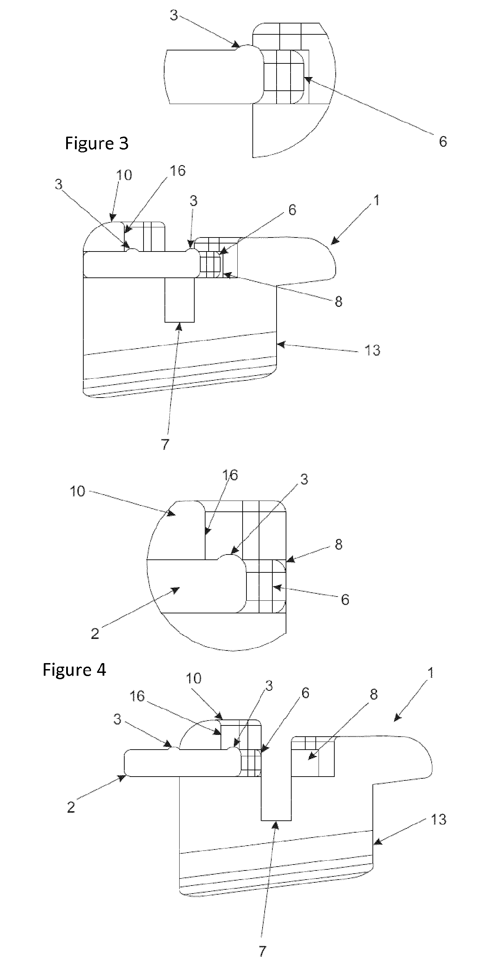

In Figures 1 to 4, 7 and 8, in particular in Figures 3 and 4 which are in side view, it is possible to verify the Muscular Activation Bar (10), which has specific dimensions to provide the performance of the orbicularis muscles lips and the release of the buccinator pressure on subsequent dentoalveolar structures; the sliding (2) door that favors a larger contact surface with the orthodontic wire (15), it is equipped with two safety locks (3) to secure the wire into the slot (7) and balance support (6) that fit into the slots (8) located in the gingival part (4) of the body of said bracket (1) providing a cover when closed completely and tightly and securely in the slot (7), thereby uniting both sides of the hybrid bioadaptative self-ligating bracket (1) as if it were a fourth fixed part.

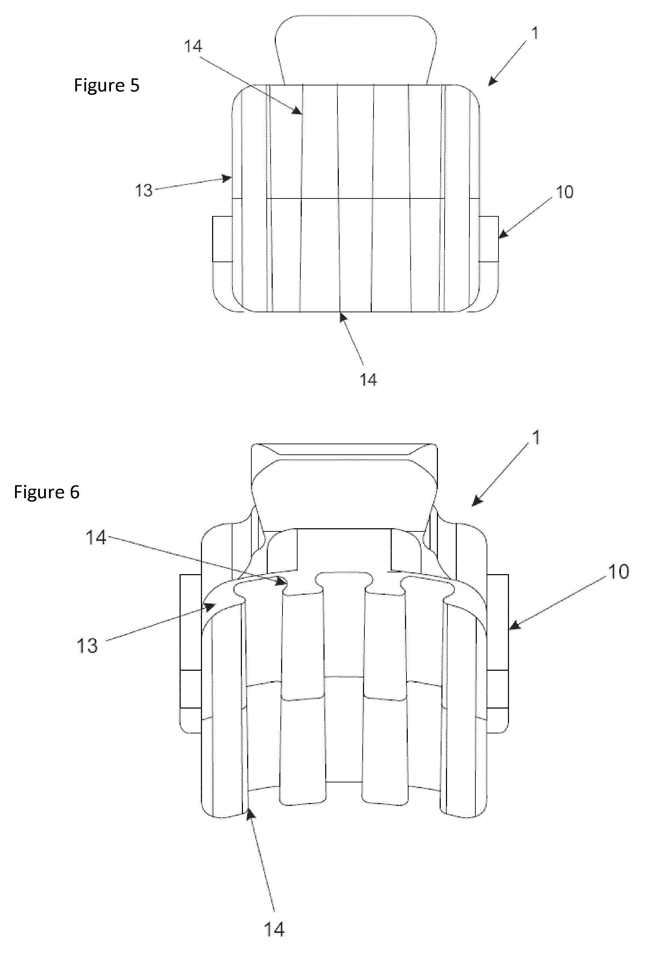

The figures 5 and 6 illustrate the base (13) of the brackets, with conical grooves and trapezoidal profile (14) that were created to allow through a simple pressure of the tip of a clinical instrument on the remaining adhesion composite of the base of the bracket (13) being easily removed without the need for an aluminum oxide jet, being immediately ready for resealing.

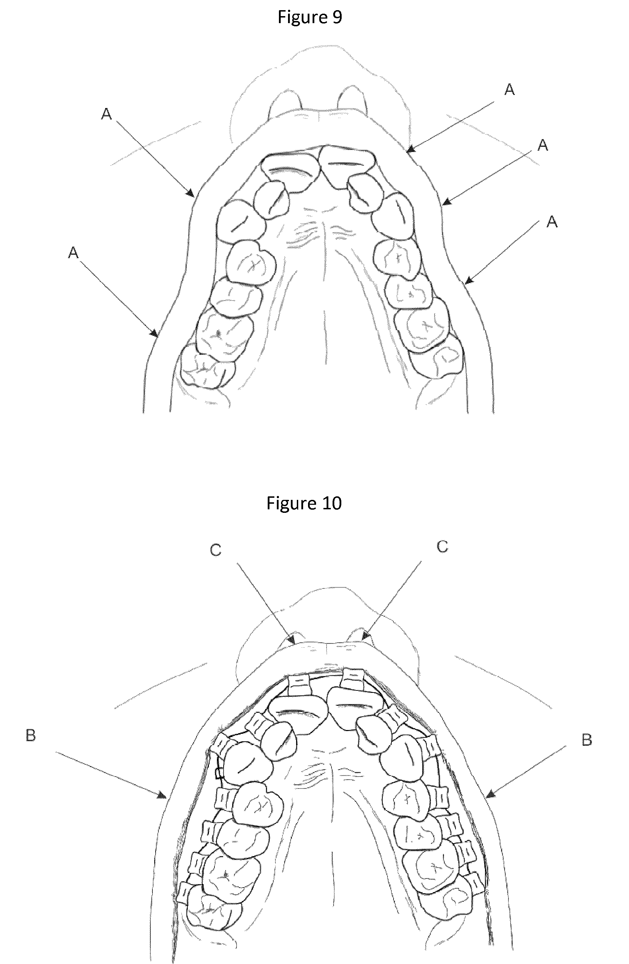

By means of Figures 9 to 11 it is possible to understand the functioning of muscle activation bar (10) illustrating an example of the upper maxillary arch, simulating activation of the orbicularis muscle of the lip and the distance from the buccinator muscles on posterior dentoalveolar structures, which are primarily responsible for atresia (A) of the maxillary arches, and Figure 9 shows an example of atresia (A) of the maxillary arch and how the buccinator muscles push the posterior region for palatine.

Figure 10 illustrates an example of the upper maxillary arch with the hybrid self-ligating bracket properly working, demonstrating the activation of the orbicular muscle on anterior brackets (C) preventing the dental vestibularization and being removed from the posterior dentoalveolar contact the buccinator muscles (B) that are primarily responsible for atresia of the maxillary arches.

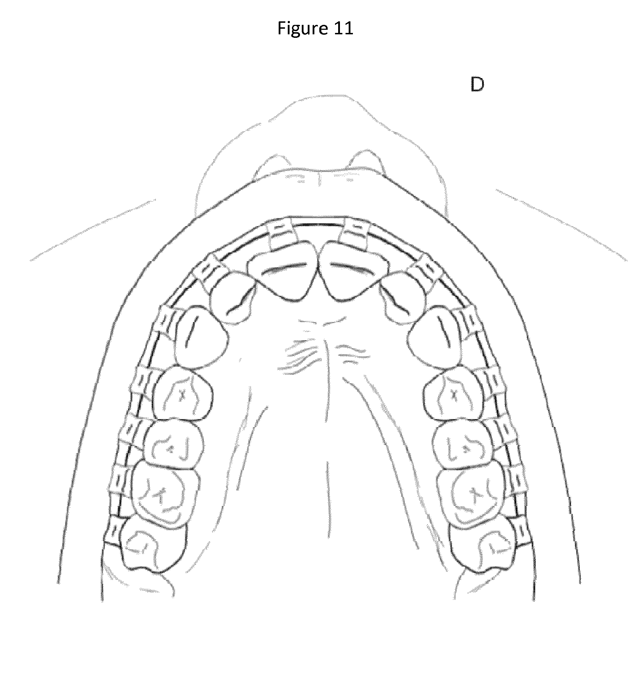

Figure 11 illustrates an example of the upper maxillary arch showing the effects achieved by using the hybrid self-ligating bracket, showing excellent leveling and alignment of the dental arch (D) due to the association of orthodontic movement in conjunction with transversal orthopedic effects in the jaws.

## Claims

1. **HYBRID BIOADAPTATIVE SELF-LIGATING BRACKET,** wherein joining the tooth movement and functional orthopedic effects in jaws, and having as characteristic the interrelation with the oral muscles, comprising:
- a muscle activation bar (10) located in one of the front portions of the bracket;
- sliding door (2) with a larger contact surface with the orthodontic wire (15); and
- base (13) having conical grooves (14).

2. **HYBRID BIOADAPTATIVE SELF-LIGATING BRACKET,** according to claim 1, wherein the bracket body comprises the following dimensions:
- length (X axis) of 4.0 mm to 5.0 mm, height (Z-axis) of 2,5 to 4,0 mm and width (Y axis) of 3,3 to 4,0 mm.

3. **HYBRID BIOADAPTATIVE SELF-LIGATING BRACKET,** according to claim 1, wherein the door (2) of the bracket comprises two security latches (3) embedded in the body of said sliding door.

4. **HYBRID BIOADAPTATIVE SELF-LIGATING BRACKET,** according to claim 1, wherein the door (2) provide stable support (6).

5. **HYBRID BIOADAPTATIVE SELF-LIGATING BRACKET,** according to claim 1, wherein stability supports (6) of the sliding door (2) adapted in engagement slots (8) located in the gingival part (4) of the said body of the bracket (1).

6. **HYBRID BIOADAPTATIVE SELF-LIGATING BRACKET,** according to claim 1, wherein the door (2) joining both sides of the body of the bracket (1) as if it were a fourth fixed part.

7. **HYBRID BIOADAPTATIVE SELF-LIGATING BRACKET,** according to claim 1, wherein the sliding door (2) is housed in a specific slot within the enhanced protection (12) of the muscle activation bar (10), sliding to the other side of the body of the bracket in bilateral slots (8) that receive the balanced bridge (6).

8. **HYBRID BIOADAPTATIVE SELF-LIGATING BRACKET,** according to claim 1, wherein the door (2) has opening and closing stage limited by the recess (16) on the body of the muscle activation bar (10).

9. **HYBRID BIOADAPTATIVE SELF-LIGATING BRACKET,** according to claim 1, wherein the door (2) slides on the slot (7) from the incisal side (5) to be supported with full stability and safety in a specific slot (8) in the gingival portion of the body of the bracket (4).

10. **HYBRID BIOADAPTATIVE SELF-LIGATING BRACKET,** according to claim 1, wherein the door presents length dimensions (X axle) of 2.7mm to 3.5 mm.

11. **HYBRID BIOADAPTATIVE SELF-LIGATING BRACKET,** according to claim 1, wherein being provided with a base (13) with conical grooves (14) for mechanical retention being situated at the rear of the bracket.

12. **HYBRID BIOADAPTATIVE SELF-LIGATING BRACKET,** according to claim 1, wherein the conical grooves (14) having trapezoidal profile.
